# EUROPÄISCHE PATENTANMELDUNG

(11) **EP 3 136 711 A1**
(43) Veröffentlichungstag der Anmeldung: **01.03.2017**
(21) Anmeldenummer: 16191820.6
(22) Anmeldetag: 16.05.2012
(51) Int. Cl.: H04N 5/232, H04N 5/235, G01B 5/004, G01B 21/04, G01B 11/00, G03B 13/36, G01B 11/03

(54) **VERFAHREN ZUR ERZEUGUNG UND AUSWERTUNG EINES BILDS**

(30) Priorität: 17.05.2011 DE 102011050408; 18.07.2011 DE 102011051894; 21.12.2011 DE 102011056788
(62) Teilanmeldung aus: 12721532.5
(71) Anmelder: Werth Messtechnik GmbH, 35394 Giessen (DE)
(72) Erfinder: CHRISTOPH, Ralf, 35394 Gießen (DE); SCHMIDT, Ingomar, 35418 Buseck (DE); WINCK, Peter, 35745 Herborn (DE)
(74) Vertreter: Stoffregen, Hans-Herbert

(57) **Zusammenfassung**

Die Erfindung bezieht sich auf ein Verfahren zur Erzeugung und Auswertung eines Bildes von zumindest einem Abschnitt eines Messobjekts in einem Koordinatenmessgerät mit einer Kamera, wobei das Koordinatenmessgerät eingesetzt wird, das Mittel zur Relativbewegung zwischen dem Messobjekt und der Kamera zur Verfügung stellt und in das der optische Sensor integriert ist,
wobei von dem zumindest einen Abschnitt Einzelbilder mit der Kamera aufgenommen werden, von denen zumindest einige Einzelbilder sich jeweils zumindest teilweise überlappen, und wobei zur Erzeugung des Bilds die Einzelbilder oder Signale dieser in Bezug zueinander ausgerichtet und zu einem Gesamtbild als das Bild des zumindest einen Abschnitts überlagert werden, wobei die Auswertung des Gesamtbildes im Wesentlichen auf die überlappenden Bereiche der Einzelbilder beschränkt wird und/oder die Auswertung des Gesamtbildes oder eines Teils von diesem unter Zugrundelegung der überlappenden Bereiche der diese aufweisenden Einzelbilder erfolgt, wobei das Verfahren zur Bilderzeugung bei Autofokusmessungen oder für die Bilderzeugung für Bildverarbeitungsmessungen während einer Kamerabewegung eingesetzt wird.

## Beschreibung

Die Erfindung bezieht sich auf ein Verfahren zur Erzeugung und Auswertung eines Bilds von zumindest einem Abschnitt eines Objekts mit einem optischen Sensor, wie einer Kamera.

Insbesondere bezieht sich die Erfindung auf ein Verfahren zur Erzeugung und Auswertung eines Bildes von zumindest einem Abschnitt eines Messobjekts in einem Koordinatenmessgerät mit einer Kamera, wobei das Koordinatenmessgerät eingesetzt wird, das Mittel zur Relativbewegung zwischen dem Messobjekt und der Kamera zur Verfügung stellt und in das der optische Sensor integriert ist.

Um rauscharme und kontrastreiche Bilder, zum Beispiel zur Bildverarbeitung oder zu Autofokusmessungen in der Koordinatenmesstechnik, aber auch anderen Technikbereichen zur Verfügung zu stellen, ist es notwendig, entsprechende Integrationszeiten an den Kameras einzustellen. An den erzeugten Aufnahmen werden in der Koordinatenmesstechnik beispielsweise Konturen bzw. Konturpunkte ermittelt. Damit dies mit höchster Genauigkeit erfolgen kann, sind möglichst scharfe Abbildungen zu bevorzugen. Dies setzt jedoch voraus, dass während der Integrationszeit der Kamera das Objekt und die Kamera nicht zueinander verschoben werden. Ansonsten treten Verschmierungseffekte auf, die die Genauigkeit bei der Konturlagenbestimmung beeinträchtigen.

Um diese Problematik zu umgehen, sind im Stand der Technik Verfahren bekannt, bei denen besonders kurze Integrationszeiten für die Kameras gewählt werden. Problematisch ist hierbei jedoch, dass die Bilder sehr dunkel und damit verrauscht sind. Um zu versuchen, diese Nachteile zu umgehen, können Lichtquellen kurzzeitig über ihre Dauerbelastung hinaus im Blitzbetrieb angesteuert werden.

Dadurch ist eine höhere Helligkeit erreichbar. Bei besonders schnellen Bewegungen und dunklen Szenen ist dies aber oftmals nicht ausreichend und die Bilder sind entweder zu dunkel und damit verrauscht oder es muss so lang integriert werden, dass die Bildunschärfe zu Messabweichungen führt.

Der US 2009/009614 A1 ist eine Digitalkamera zu entnehmen, bei der eine Korrelation zwischen einzelnen aufgenommenen Bildern erfolgt.

Um ein Panoramabild zu erzeugen, werden nach der US 2010/085422 A1 in verschiedenen Drehstellungen einer Kamera Bilder aufgenommen, die mittels Korrelation aneinandergereiht werden.

Bekannte Verfahren zum Ausrichten bzw. Registrieren von Bildern sind der Veröffentlichung Richard Szeliski: "Image Alignment and Stitching: A Tutorial", 10. Dezember 2006 (2006-12-10), XP002680820, zu entnehmen.

Ein Verfahren zum Zusammensetzen von Einzelbildern zu einem Gesamtbild ist aus der US 6 813 391 B1 bekannt.

Nach der US 6 720 997 B1 werden mittels einer elektronischen Kamera in einem ersten Modus ein Gesamtbild eines Bereichs eines Objektes und in einem zweiten Modus Teilbilder ermittelt, die sodann mittels einer Bildverarbeitung zusammengesetzt werden, die dem ersten Bild entsprechen.

Ein Bilderkennungssystem, wie der Erkennung eines Barcodes, ist der US 2011/0102542 A1 zu entnehmen. Dabei erfolgt ein Registrieren mehrerer Bilder.

Aus der DE 10 2005 058 353 A1 ist ein Verfahren zur Aufnahme digitaler Abbildungen bekannt. Ein aufzunehmender Gegenstand wird auf einer Drehscheibe angeordnet, um sodann mittels einer Digitalkamera Abbildungen in verschiedenen Drehstellungen aufzunehmen.

Ein Verfahren und eine Anordnung zur Durchführung von zweidimensionalen Messungen an bewegten Meßobjekten sind in der DE 102 48 779 A1 beschrieben.

Zur Erfassung der Geometrien großer Werkstücke wird nach der EP 1 286 134 B1 das Werkstück in verschiedenen Positionen bei blitzartiger Belichtung aufgenommen.

Nach der EP 2 242 021 A1 kann eine Langzeitaufnahme durch eine Sequenz von Kurzzeitaufnahmen zu geringfügig unterschiedlichen Zeiten simuliert werden.

Der vorliegenden Erfindung liegt die Aufgabe zugrunde, ein Verfahren der eingangs genannten Art so weiterzubilden, dass die Nachteile des Stands der Technik vermieden werden, insbesondere ein helles Bild erzeugt wird, das Unschärfen nicht oder nicht in einem Umfang aufweist, dass Messverfälschungen auftreten, insbesondere auch dann, wenn eine Relativbewegung zwischen der Kamera und dem Objekt bzw. des aufzunehmenden Abschnitts erfolgt.

Zur Lösung der Aufgabe wird u. a. vorgeschlagen, dass von dem zumindest einen Abschnitt mehrere Einzelbilder aufgenommen werden und dass zur Erzeugung des Bilds die Einzelbilder oder Signale dieser in Bezug auf den zumindest einen Abschnitt zueinander ausgerichtet und zu einem Gesamtbild überlagert werden.

Insbesondere bezieht sich die Erfindung auf ein Verfahren zur Erzeugung und Auswertung eines Bildes von zumindest einem Abschnitt eines Messobjekts in einem Koordinatenmessgerät mit einer Kamera, wobei das Koordinatenmessgerät eingesetzt wird, das Mittel zur Relativbewegung zwischen dem Messobjekt und der Kamera zur Verfügung stellt und in das der optische Sensor integriert ist, das sich dadurch auszeichnet, dass von dem zumindest einen Abschnitt Einzelbilder mit der Kamera aufgenommen werden, von denen zumindest einige Einzelbilder sich jeweils zumindest teilweise überlappen, und dass zur Erzeugung des Bilds die Einzelbilder oder Signale dieser in Bezug zueinander ausgerichtet und zu einem Gesamtbild als das Bild des zumindest einen Abschnitts überlagert werden, wobei die Auswertung des Gesamtbildes im Wesentlichen auf die überlappenden Bereiche der Einzelbilder beschränkt wird und/oder die Auswertung des Gesamtbildes oder eines Teils von diesem unter Zugrundelegung der überlappenden Bereiche der diese aufweisenden Einzelbilder erfolgt, wobei das Verfahren zur Bilderzeugung bei Autofokusmessungen oder für die Bilderzeugung für Bildverarbeitungsmessungen während einer Kamerabewegung eingesetzt wird.

Insbesondere sieht die Erfindung eine Lösung vor, die sich dadurch auszeichnet, dass von dem einem Abschnitt Einzelbilder oder von mehreren Abschnitten Einzelbilder derart aufgenommen werden, dass Einzelbilder sich zumindest teilweise überlappen, und dass zur Erzeugung des Bilds die Einzelbilder oder Signale dieser in Bezug zueinander ausgerichtet und zu einem Gesamtbild als das Bild des oder der Abschnitte überlagert werden, wobei zum Auswerten des Gesamtbildes Bereiche von Einzelbildern berücksichtigt werden, die sich überlappen.

Die Erfindung schlägt ein Verfahren zur Erzeugung und Auswertung eines Bildes von zumindest einem Abschnitt eines Objekts mit einem optischen Sensor, wie einer Kamera, vor, das sich dadurch auszeichnet, dass von dem zumindest einen Abschnitt Einzelbilder aufgenommen werden, von denen zumindest einige Einzelbilder sich jeweils zumindest teilweise überlappen, und dass zur Erzeugung des Bilds die Einzelbilder oder Signale dieser in Bezug zueinander ausgerichtet und zu einem Gesamtbild als das Bild des zumindest einen Abschnitts überlagert werden, wobei die Auswertung des Gesamtbildes im Wesentlichen auf die überlappenden Bereiche der Einzelbilder beschränkt wird und/oder die Auswertung des Gesamtbildes oder eines Teils von diesem unter Zugrundelegung der überlappenden Bereiche der diese aufweisenden Einzelbilder erfolgt.

Aufgrund der erfindungsgemäßen Lehre wird eine Positionsveränderung zwischen dem optischen Sensor - nachstehend nicht schutzeinschränkend auch als Kamera bezeichnet - und dem zumindest einen Abschnitt des Objekts während der Aufnahmen der Einzelbilder berücksichtigt, so dass ein helles, Bewegungsunschärfen nicht aufweisendes Bild zur Verfügung steht.

Die Erfindung bezieht sich somit auf ein Verfahren zur Bilderzeugung mit einer Kamera, wobei aus mehreren Einzelbildern grundsätzlich durch Überlagerung unter Berücksichtigung des Lageversatzes zwischen den Einzelaufnahmen ein Gesamtbild erzeugt wird.

Insbesondere werden die Intensitäten mehrerer Einzelaufnahmen überlagert, um ein helleres Gesamtbild zu erzeugen. Da physikalisch bedingt zwischen zwei Einzelaufnahmen immer eine leichte Positionsverschiebung zwischen Kamera und aufgenommenen Messobjektbereich vorliegt, muss diese Lageverschiebung korrigiert werden.

Dies kann erfindungsgemäß dadurch erfolgen, dass zu jeder Einzelaufnahme die Position gemessen wird oder anhand der aufgenommenen Bilder die Korrelation untersucht und daraus die Lageabweichung berechnet wird.

Im nächsten Schritt werden die Einzelaufnahmen entsprechend ihrer Lageabweichung zueinander auf eine gemeinsame Position und vorzugsweise in ein gemeinsames Pixelraster verschoben. Anschließend erfolgt die Überlagerung der Grauwertamplituden zur Bildung eines überlagerten Bildes. Diesem Bild wird zumindestens in den lateralen Richtungen die Messposition des gewählten Pixelrasters zugewiesen. In der verbleibenden dritten Raumrichtung senkrecht zur Bildebene wird vorzugsweise eine Mittelung der Position der überlagerten Einzelaufnahmen zugeordnet.

Dies bedeutet, dass ein Mittelwert aus den Abstandswerten zur Bildebene berechnet wird. Liegt die Bildebene in der x-y-Ebene wird infolgedessen der dem Bild- bzw. Gesamtbild zuzuordnende Z-Wert durch Mittelung der Einzel-Z-Werte der Einzelbilder berechnet.

Erfindungsgemäß wird aus Einzelbildern ein Summenbild erzeugt, dass die erforderliche Helligkeit aufweist, ohne dass Bewegungsunschärfen auftreten, so dass der zumindest eine Abschnitt des Objekts ausgewertet und damit gemessen werden kann.

Es werden die Einzelbilder - auch als Teilbilder bezeichnet - in Bezug auf den in diesen vorhandenen selben Abschnitt des Objekts zueinander ausgerichtet, um ein Summenbild zu erzeugen, das das Gesamtbild und somit das zu erzeugende Bild ist.

Das Merkmal, dass von zumindest einem Abschnitt eines zu messenden Objekts Einzelbilder aufgenommen werden, schließt selbstverständlich nicht aus, dass das gesamte Objekt erfasst wird.

Die Erfindung bezieht sich auf ein Verfahren zur Bilderzeugung mit einem optischen Sensor wie einer Kamera, bei dem mehrere Einzelaufnahmen überlagert werden, die im Wesentlichen den gleichen Abschnitt eines Objektes enthalten, also sich größtenteils überlagernde Objektabschnitte enthalten, wobei die räumliche Lage der Einzelaufnahmen zueinander berücksichtigt wird.

Insbesondere zeichnet sich die Erfindung dadurch aus, dass die räumliche Lage der Einzelaufnahmen zueinander unter Zuhilfenahme der Korrelation der Grauwerte der Einzelaufnahmen und/oder unter Zuhilfenahme der zu jeder Einzelaufnahme bestimmten Sensor- bzw. Kameraposition ermittelt wird. Die Sensor- bzw. Kameraposition ergibt sich beispielsweise aus den Positionen der Achsen des Koordinatenmessgerätes, in dem der Sensor bzw. die Kamera integriert ist.

Es erfolgt ein Korrelieren der Grauwerte derart, dass der größte Summenwert gebildet wird. Dieser repräsentiert die größte Übereinstimmung der Einzelbilder in Bezug auf den zumindest einen Abschnitt, der durch scheinbares seitliches, also laterales Verschieben der zu überlagernden Einzelbilder erzielbar ist.

Die Erfindung zeichnet sich dadurch aus, dass die Überlagerung durch Addition der Intensitäten beziehungsweise Grauwerte der Pixel der Einzelaufnahmen erfolgt.

Dabei kann vorgesehen sein, dass vor der Überlagerung der räumliche Lageversatz zwischen den Einzelaufnahmen durch Verschiebung und / oder Drehung, zumindest in der Bildebene der Einzelaufnahmen, korrigiert wird.

Die Erfindung zeichnet sich auch dadurch aus, dass das aus den Einzelaufnahmen erzeugte Bild nur die überlappenden Bildabschnitte enthält, die in allen Einzelaufnahmen vorhanden sind.

Eigenerfinderisch sieht die Erfindung aber auch vor, dass zur Auswertung des Gesamtbildes zumindest ein überlappungsfreier Bereich eines oder mehrerer Einzelbilder berücksichtigt wird und dass zur Auswertung des überlappungsfreien Bereichs dessen Grauwert auf den Grauwert von auszuwertendem Überlappungsbereich von Einzelbildern normiert wird.

Somit werden erfindungsgemäß zunächst alle aufgenommenen Einzelbilder bei der Ermittlung und Auswertung des Gesamtbildes berücksichtigt, unabhängig davon, ob sie sich überlappen oder den gleichen oder zumindest größtenteils gleichen Bereich bzw. Abschnitt des Bauteils erfassen. Vorzugsweise wird beim Überlagern der Bilder für Abschnitte, von denen mehrere Einzelbilder vorliegen, die Überlagerung aus den Einzelaufnahmen durchgeführt. Für Abschnitte, von denen nur eine Einzelaufnahme vorliegt, wird eine entsprechende Wichtung der Grauwerte vorgenommen, um gleiche Gesamthelligkeit wie bei den überlagerten Bildern zu erreichen.

Ganz allgemein zeichnet sich die Erfindung auch dadurch aus, dass die Grauwerte auszuwertender Bereiche normiert werden, insbesondere auf einen Grauwert normiert werden, der dem eines Bereichs mit maximaler Überlappung entspricht.

Die Erfindung wird jedoch auch dann nicht verlassen, wenn einzelne Bereiche von der Auswertung ausgeschlossen werden.

Aus der Gesamtheit aller endgültig berücksichtigten Einzelbilder wird ein Gesamtbild zusammengesetzt. An diesem Gesamtbild können Auswertungen mit Hilfe von Bildverarbeitungsalgorithmen erfolgen, wie beispielsweise Bestimmung von Kanten oder Abständen von Kanten oder geometrischen Merkmalen.

Bevorzugterweise ist vorgesehen, dass der Überlappungsbereich der Abschnitte kleiner als 100 % beträgt, insbesondere zwischen 100 % und 10 %, vorzugsweise zwischen 100 % und 50 % liegt.

Erfindungsgemäß ist vorgesehen, dass der Überlappungsbereich der aufgenommenen Einzelbilder vorzugsweise weniger als 100 % des jeweiligen Einzelbilds beträgt.

In einem bevorzugten Verfahren beträgt die Überlappung ca. 50 %, wodurch für jeden Bereich eine Überlagerung von jeweils zwei Einzelbildern erfolgen kann. Alternativ kann die Überlappung auch größer sein, beispielsweise zwischen 60 % und 90 %. Hierdurch werden je Bereich mehr als zwei Bilder überlagert, wodurch eine noch höhere Helligkeit und damit ein geringeres Rauschen erreicht werden kann. Damit werden noch geringere Integrationszeiten der Kamera möglich. Bei der Überlagerung bzw. Mittelwertbildung wird dann die Anzahl der überlagerten Bilder berücksichtigt, indem eine entsprechende Skalierung erfolgt. Beträgt der Überlappungsbereich weniger als 50 %, so entstehen Bereiche, bei denen überlagerte Bilder zur Verfügung stehen und Bereiche, bei denen dies nicht der Fall ist. In Bereichen, für die keine überlagerten Bilder zur Verfügung stehen, wird die Helligkeit durch Skalierung bzw. Wichtung der Grauwerte angepasst auf die Helligkeit der überlagerten Bilder.

Die Erfindung zeichnet sich auch dadurch aus, dass die Größe des Gesamtbildes größer als die Größe eines Einzelbildes ist.

Besonders hervorzuheben ist des Weiteren, dass die Einzelbilder in verschiedenen Drehstellungen des Objektes aufgenommen werden können. Somit werden nach einem selbständigen Lösungsvorschlag die Einzelbilder in verschiedenen Drehstellungen eines Messobjektes aufgenommen. Hierdurch ist es möglich, verschiedene Teilbereiche des Messobjektes aufzunehmen, die sich z. B. auf der Mantelfläche eines rotationssymmetrischen Bauteils befinden. Eine Kombination mit einer lateralen Bewegung des Messobjekts zur Erstellung eines in mehreren Dimensionen vergrößerten Gesamtbildes im Vergleich zu den Einzelbildern ist ebenso möglich.

Auch zeichnet sich die Erfindung dadurch aus, dass wahlweise gesamte Fläche oder ein Teilbereich oder mehrere Teilbereiche der Detektionsfläche der Kamera genutzt werden, vorzugsweise eine eingeschränkte Anzahl von Zeilen.

Es wird die Bildwiederholrate im Vergleich zum Stand der Technik dadurch deutlich gesteigert, dass nur Teile der zur Verfügung stehenden Zeilen und/oder Spalten einer matrixförmigen Detektionsfläche wie Kamera zur Auswertung verwendet werden.

Hierbei lassen sich beispielsweise Bildwiederholraten von ca. 300 - 400 Hz realisieren. Insbesondere an gekrümmten Flächen werden durch Reduzierung der Zeilen oder Spalten nur die Bereiche ausgewertet, welche im Schärfentiefenbereich der verwendeten Abbildungsoptik angeordnet sind.

Die Auswahl der entsprechenden Bereiche kann entweder manuell, durch fest vordefinierte Angabe eines Messfensters, z. B. in einem Vorablauf bzw. im Rahmen der Erstellung eines Messprogramms, erfolgen und/oder automatisch während des Ablaufs des Messprogramms durch Auswertung des Kontrastes der aufgenommenen Bilder und Auswahl der Zeilen, die einen vordefinierten Grenzwert des Kontrastes überschreiten.

Insbesondere ist vorgesehen, dass die Teilbereiche jeweils durch eine eingeschränkte Anzahl von Zeilen und/oder Spalten der matrixförmigen Detektionsfläche festgelegt bzw. bestimmt werden.

Die erfindungsgemäße Lehre ermöglicht, dass bei der Aufzeichnung und/oder Verarbeitung der Messwerte von lediglich Teilbereichen der fotosensitiven Detektionsfläche eine erhöhte Messfrequenz verwendet wird.

Zur Definition der auszuwertenden Teilbereiche vor der eigentlichen Messung eignet sich insbesondere die Definition fest vorgegebener Fenster. Diese können beispielsweise im Rahmen der Messprogrammerstellung festgelegt werden. Hierbei kann der Bediener entweder manuell oder unter Zuhilfenahme von Auswerte-Tools den Bereich des Messfensters definieren, welcher die zu messenden Teilbereiche oder die Bereiche scharfer Abbildungen enthält. Eine Veränderung der auszuwertenden Teilbereiche während des Messablaufes, insbesondere in Echtzeit, kann durch Bestimmung des Kontrastes über das gesamte Bild erfolgen. Die Bestimmung der Kontrastwerte der einzelnen Pixel des Bildes kann dabei entweder direkt in dem Sensor - erwähntermaßen vereinfacht und ohne Einschränkung der erfindungsgemäßen Lehre auch als Kamera bezeichnet -, also ohne Übermittlung des Bildes an einen Host-Rechner, oder direkt in der Bildverarbeitungssoftware des Host-Rechners erfolgen. Insbesondere bei Auswertung des Kontrastes im Host-Rechner werden nicht alle, sondern nur einzelne ausgewählte Bilder von der Kamera komplett übermittelt und ausgewertet, um eine möglichst hohe Messfrequenz zu erlauben. Hierbei wird davon ausgegangen, dass sich die Kontrastwerte innerhalb des Bildes deutlich langsamer als die Wiederholfrequenz der Kamera ändern.

Bevorzugterweise ist vorgesehen, dass durch Umschaltung der auszuwertenden Teilbereiche eine Anpassung auf den Bereich des Messobjektes erfolgt, der sich im Schärfentiefenbereich der verwendeten Abbildungsoptik befindet.

Die Erfindung sieht insbesondere vor, dass die räumliche Lage der Einzelaufnahmen zueinander unter Zuhilfenahme der Drehlage des Bauteils ermittelt wird und vorzugsweise die Einzelbilder aufgrund der Krümmung des Objektes entzerrt werden. Bei der Aufnahme von Einzelaufnahmen in unterschiedlichen Drehlagen des Bauteiles werden die Einzelbilder aufgrund der Krümmung des Messobjektes verzerrt. In einem eigenständigen erfinderischen Gedanken wird diese Krümmung der Einzelbilder entzerrt. Unter Zuhilfenahme des bekannten oder nahezu bekannten z. B. vorab eingegebenen Krümmungsradius der Bauteiloberfläche werden die Bereiche im Bild entsprechend der vorliegenden Krümmung entzerrt, in dem die laterale Position der aufgenommenen Pixelinformationen verschoben wird. Dieses im Stand der Technik auch bekannte Abwickeln einer rotationssymmetrischen Mantelfläche führt nach der Entzerrung zunächst zu einem nicht äquidistanten Pixelraster. Dies wird durch Resampling auf ein äquidistantes Pixelraster zur weiteren Auswertung umgerechnet.

Kennzeichnend für die Erfindung kann ist des Weiteren sein, dass die Überlagerung durch Mittelung der Intensitäten bzw. Grauwerte der positionsmäßig einander entsprechenden Pixel der Einzelaufnahme erfolgt und vorzugsweise die sich ergebenden Grauwerte gespreizt werden, vorzugsweise durch Division, vorzugsweise mit einem Faktor, welcher der maximal für ein Pixel zur Überlagerung herangezogenen Anzahl von Grauwerten im Gesamtbild entspricht.

Durch diese Maßnahmen erfolgt eine Anpassung des auszuwertenden Grauwertbereichs auf einen gemeinsamen Maximalgrauwert.

Es zeichnet sich die Erfindung insbesondere auch dadurch aus, dass die Bereiche im Gesamtbild unberücksichtigt bleiben, die nach der Überlagerung einen Grauwert unterhalb eines Schwellwertes besitzen, wobei der Schwellwert vorzugsweise 20 %, besonders bevorzugte 10 % des maximalen Grauwertes beträgt.

Bereiche im Gesamtbild, deren Grauwert auch nach der Überlagerung bzw. aufgrund dessen, dass keine Überlagerung stattgefunden hat, unterhalb eines Schwellwertes liegt, welcher beispielsweise 20 % oder besonders bevorzugt 10 % des maximalen Grauwertes beträgt, werden bei der Ermittlung des Gesamtbildes nicht berücksichtigt. Hierdurch werden Bereiche von der Auswertung ausgeschlossen, die ein zu niedriges Signal-RauschVerhältnis besitzen.

Besonders hervorzuheben ist des Weiteren, dass bei der Überlagerung eine Wichtung der Bereiche erfolgt, in denen zumindest eines der für die Überlagerung herangezogenen Einzelbilder im Randbereich vorliegt.

Bei der Überlagerung erfolgt eine Wichtung der Bereiche, in denen zumindest eines der für die Überlagerung herangezogenen Einzelbilder im Randberiech vorliegt. Dies ist immer dann der Fall, wenn die Überlagerung weniger als 50 % beträgt. Hierbei entstehen im zusammengesetzten überlagerten Bild Bereiche, bei denen eine Überlagerung erfolgen kann, nämlich die Randbereiche der Einzelbilder. In den mittleren Bereichen der Einzelaufnahmen liegt dagegen keine Überlagerung vor. Entsprechend der Anzahl der zur Überlagerung herangezogenen Bilder muss also eine entsprechende Wichtung zur Sicherung gleicher Gesamthelligkeit am überlagerten Bild erfolgen.

Insbesondere zeichnet sich die Erfindung dadurch aus, dass nach der Korrektur des Lageversatzes zwischen den Einzelaufnahmen, die Pixel aller verwendeten Einzelaufnahmen in ein gemeinsames, vorzugsweise äquidistantes Punkteraster durch Resampling umgerechnet werden, wobei für jedes Zielpixel der Grauwert aus den Grauwerten der umgebenden Pixel vorzugsweise durch lineare Interpolationsverfahren oder Mittelungsverfahren berechnet wird.

Erfindungsgemäß ist des Weiteren vorgesehen, dass durch das Resampling eine höhere laterale Auflösung erreicht werden kann als bei der bisher bekannten Bestimmung von einzelnen Punkten anhand eines Einzelbildes. Durch die Einzelbildüberlagerung bzw. - überlappung, also die Verwendung von mehrfach aufgenommenen Informationen des gleichen Objektabschnittes, können diese redundanten Informationen benutzt werden, um die Messauflösung zu erhöhen. Insbesondere ist vorgesehen, dass die aus zumindest zwei Einzelaufnahmen stammenden Informationen zu zumindest einem Bereich des Bildes gemeinsam zur Bestimmung der Lage eines Merkmals in diesem Bildbereich verwendet werden, vorzugsweise durch das Einsetzen von Resampling-Verfahren, um die laterale Auflösung zu erhöhen. Hierbei wird für alle Pixelpositionen aus allen Einzel- bzw. Teilbereichen ein resultierendes Pixel bestimmt.

Hervorzuheben ist des Weiteren, dass jeweils mehrere Einzelaufnahmen direkt aufeinander folgend aufgenommen werden, vorzugsweise mit kürzerer Integrationszeit als eine Standardintegrationszeit - beispielsweise 20 Millisekunden -, besonders bevorzugt mit Integrationszeiten < 5 Millisekunden oder < 1 Millisekunde oder < 0,5 Millisekunden. Die Integrationszeit T für die jeweilige Einzelaufnahme sollte betragen 4 T ≤ t, insbesondere oder 20 T ≤ t, besonders bevorzugt 40 T ≤ t mit t = Standardintegrationszeit. Insbesondere sollte gelten 1/50 t ≤ T ≤ ½ t.

Erfindungsgemäß werden die Einzelbilder mit kürzeren Integrationszeiten im Vergleich zu der Integrationszeit aufgenommen, in denen üblicherweise ein Bild aufgenommen wird, das ausgewertet wird. Übliche Standardintegrationszeiten können bei 20 Millisekunden liegen, um einen auswertbaren Kontrast sicherzustellen. Diesbezügliche Werte sind jedoch rein beispielhaft zu verstehen. Insbesondere ist vorgesehen, dass die Gesamtintegrationszeit der Einzelbilder kleiner als eine übliche Standardintegrationszeit ist.

Insbesondere bezieht sich die Erfindung auf ein Verfahren zur Erzeugung eines Bildes mit einem optischen Sensor wie Kamera, wobei dem Bild eine Integrationszeit T-gesamt zugeordnet wird, bei dem mehrere Einzelaufnahmen, aufgenommen mit Integrationszeiten T₁ bis Tₙ, wobei alle T₁ bis Tₙ mit kürzerer Integrationszeit, wie < 5 ms oder < 1 ms oder < 0,5 ms, aufgenommen werden als T-gesamt, überlagert werden, wobei die räumliche Lage der Einzelaufnahmen zueinander bestimmt und bei der Überlagerung berücksichtigt wird.

Das erfindungsgemäße Verfahren wird insbesondere zur Bestimmung von Objektpunkten und / oder Konturen und / oder Maßen von Messobjekten, vorzugsweise in einem Koordinatenmessgerät, eingesetzt, wobei das Koordinatenmessgerät Mittel zur Relativbewegung zwischen Messobjekt und Kamera zur Verfügung stellt.

Vorzugsweise ist vorgesehen, dass das Verfahren zur Bilderzeugung bei Autofokusmessungen, vorzugsweise mit erhöhter Bewegungsgeschwindigkeit V mit V > 0,3 mm/s oder V > 1mm/s oder V > 3 mm/s, als eine Standardbewegungsgeschwindigkeit von ca. 0,3 mm/s bis 0,1 mm/s, oder für die Bilderzeugung für Bildverarbeitungsmessungen während einer Kamerabewegung eingesetzt wird. Bei der Autofokusmessung wird hauptsächlich der Abstand zwischen dem optischen Sensor wie Kamera und dem Messobjekt variiert.

Ein eigenerfinderischer Lösungsgedanke zeichnet sich dadurch aus, dass bei Autofokusmessungen in Richtung optischer Achse des optischen Sensors Einzelbilder aufgenommen werden, dass aufeinanderfolgende Einzelbilder überlagert und in Gruppen unterteilt werden, wobei jede Gruppe ein Bild für die Autofokusmessung bildet, und dass sämtliche Einzelbilder unter Berücksichtigung eines gegebenenfalls vorhandenen seitlichen Versatzes in Bezug auf das Objekt zueinander ausgerichtet werden.

Die der Erfindung zugrunde liegende Lehre kann insbesondere bei einem Verfahren zur Bilderzeugung für Autofokusmessungen eingesetzt werden. Dabei werden zumindest zwei in Richtung der optischen Achse des optischen Sensors benachbarte Einzel- oder Teilbilder gleichen Abschnitts des Messobjekts überlagert, wobei die Gesamtanzahl der Einzelbilder in Gruppen unterteilt wird. Jede Gruppe bildet somit ein Bild bzw. Gesamtbild für die Autofokusmessung. Um die Bilder zu überlagern, wird ein ggf. seitlicher, also lateraler Versatz des aufgenommenen Abschnitts des Messobjekts berücksichtigt. Durch die diesbezügliche Lehre werden bei Autofokusmessungen kurze Integrationszeiten ermöglicht. Schließlich ergibt sich u. a. der Vorteil, dass Unschärfen vermieden werden und Abweichungen der lateralen, also seitlichen Position zwischen optischem Sensor und Messobjekt während der Integrationszeit der Kamera minimiert werden.

In einer eigenständigen Ausgestaltung der Erfindung wird der grundlegende Gedanke, Bewegungsunschärfe zu reduzieren, indem kurze Belichtungszeiten für den optischen Sensor wie Kamera gewählt werden, auf Autofokusmessungen angewendet. Hierbei werden, unabhängig von den gewählten Beleuchtungsverhältnissen oder Oberflächenbeschaffenheiten des Messobjektes zunächst nur sehr kurz belichtete Bilder während der Relativbewegung des optischen Sensors in Abbildungsrichtung aufgenommen, die jedoch dadurch sehr dunkel sind.

Die Überlagerung hat zum Ziel, die Helligkeit, also die Grauwerte in den Teilbildern, auf einen sinnvollen Wert zu erhöhen, die beispielsweise denen bei einer Standardbelichtungszeit von z. B. 20 ms entspricht. Vorteilhaft ist dabei, dass entgegen einem mit Standardbelichtungszeit belichteten Bild, die kürzer belichteten Bilder deutlich weniger von der Bewegung in Bewegungsrichtung, aber auch quer dazu, beeinflusst werden. Jedem in Bewegungsrichtung aufgenommenen Teilbild wird eine Position in allen drei Raumrichtungen, also zwei lateralen und einer Richtung in nahezu der Bewegungsrichtung zugeordnet. Die Gesamtheit der Teilbilder bildet den so genannten Bilderstapel.

Erfindungsgemäß werden vor der Überlagerungen alle Teilbilder in ein gemeinsames Raster quer zur Bewegungsrichtung überführt, vorzugsweise durch Resampling. Hierdurch entstehen einander entsprechende Bereiche in den Teilbildern.

Anschließend wird für jedes Teilbild des entstandenen Bilderstapels und für jeden Teilbereich wie einzelnes Pixel oder zusammenhängende Gruppe von Pixeln getrennt eine Überlagerung der Grauwerte der jeweils einander entsprechenden Bereiche durchgeführt.

Hierdurch entsteht ein neuer Bilderstapel mit gleicher Anzahl von Teilbildern, wobei die Pixel dieser nun höhere Grauwerte enthalten. Diese Überlagerung kann auch als gleitend bezeichnet werden, analog zu einem gleitenden Mittelwertfilter, in Folge dessen Anwendung auch die Anzahl der Eingangswerte gleich bleibt.

Für jeden Teilbereich jedes Teilbildes wird die Anzahl der zur Überlagerung herangezogenen korrespondierenden Teilbereiche der in Bewegungsrichtung benachbarten Teilbilder getrennt nun so gewählt, dass ein Schwellwert für den Grauwert überschritten wird. Hierdurch wird sichergestellt, dass alle Teilbereiche in allen Teilbilder für eine sinnvolle Auswertung eines Fokuskriteriums, beispielsweise durch Bildung von Kontrastwerten und Auswertung der Position des höchsten Kontrastes in Bewegungsrichtung, hoch genug sind. Der Schwellwert ist in bevorzugter Weise, aber nicht notwendigerweise, für alle Teilbereiche in allen Teilbildern gleich groß, beispielsweise 30% oder 50% oder 70% des maximal möglichen Grauwertes. Vor der Bildung von Kontrastwerten muss jedoch eine Normierung auf eine vorgegebene Anzahl von Überlagerungen erfolgen, damit die Grauwerte der Teilbereiche virtuell der gleichen Belichtungszeit entsprechen.

Um zu verhindern, dass eine zu starke Mittelung der sich Verfahrensgemäß entlang der Bewegungsrichtung ändernden Bildkontraste erfolgt, wird die Anzahl der zur Überlagerung herangezogenen Teilbilder begrenzt bzw. der Weg in Bewegungsrichtung, aus denen diese entstammen. Die Wegbegrenzung kann beispielsweise in Relation zur Schärfentiefe der verwendeten Abbildungsoptik definiert werden, beispielsweise auf 100%, bevorzugt auf 50%, besonders bevorzugt auf 20% oder 10% der Schärfentiefe.

In einer besonderen Ausgestaltung werden zur Überlagerung gleich viele benachbarte Teilbilder in positiver und negativer Bewegungsrichtung ausgewählt. Durch die hierbei entstehende Symmetrie wird der Position des resultierenden Teilbereiches in Bewegungsrichtung die Position des ursprünglichen Teilbereiches in Bewegungsrichtung zugeordnet. Alternativ wird der Mittelwert oder der Median der Positionen der jeweils zur Überlagerung verwendeten Teilbereiche in Bewegungsrichtung zugeordnet.

Das Prinzip der Autofokusmessung und deren Anwendung ist z. B. der DE.Z.: Multisensor-Koordinatenmesstechnik, Die Bibliothek der Technik, verlag moderne industrie, 3. Auflage 2006, (ISBN-10: 3-937 889-51-5, ISBN-13: 978-3-937 889-51-1) Seiten 26-27 (Autofokus) und Seite 32 (3D-Patch), zu entnehmen.

Die Erfindung zeichnet sich auch dadurch aus, dass während der Aufnahme der zu überlagernden Einzelaufnahmen eine vorzugsweise blitzartige Beleuchtung eingeschaltet wird, wobei Einzelbildaufnahme, Beleuchtung und Aufnahme der Position der Achsen des Koordinatenmessgerätes derart synchronisiert wird, dass eine exakte Position für jede Einzelaufnahme vorliegt und gewährleistet ist, dass während der Integrationszeit jeder Einzelaufnahme die Beleuchtung eingeschaltet ist.

Höchste Messgeschwindigkeiten lassen sich erreichen, indem das erfindungsgemäße Verfahren mit den Verfahren des Bildverarbeitungsscannings oder so genannten "On-the-fly"-Technologien kombiniert wird, bei denen die Bildaufnahme während der Bewegung des Messobjektes erfolgt. Zur Reduzierung der Bewegungsunschärfe wird das fotosensitive Detektionsmittel des optischen Sensors bzw. der Kamera dabei nur kurzzeitig belichtet, z. B. durch den Einsatz einer blitzartigen Beleuchtung oder von Shuttern. Die zeitlich begrenzte Belichtung erfolgt dabei synchron zur Aufnahme der aktuellen Werkstückposition bzgl. des fotosensitiven Detektionsmittels mit Hilfe von Positionserfassungsmitteln und der Messwertaufnahme des fotosensitiven Detektionsmittels. Diese Verfahren werden u.a. in der EP-B-1 286 134 und der WO-A-03/009070 beschrieben, deren Offenbarungen Gegenstand der vorliegenden Erfindung sind.

Bevorzugterweise enthält die Kamera mehrere Pixel und ist bevorzugterweise eine CCD- oder CMOS-Kamera.

Unabhängig hiervon können als Messobjekte solche verwendet werden, die eine rotationssymmetrische und/oder zylindrische Gestalt aufweisen, insbesondere Stents sind.

Insbesondere werden zur Messung rotationssymmetrischer und/oder zylindrischer Messobjekte Dreh- und/oder Schwenkachsen eingesetzt.

Bei der Objektmessung mit Bildverarbeitung und manuellen Positioniersystemen, muss die zu messende Position zunächst durch die manuelle Bestätigung der Bewegungsachsen angefahren werden. Nach Erreichen dieser Position wird die Bildaufnahme ausgelöst und Geometriemerkmale ausgewertet. Die DE-A-10 2009 044 099 beschreibt eine Erweiterung des Verfahrens, bei der die Positionierung an der zu messenden Stelle nicht unterbrochen werden muss, sondern die Messwertaufnahme in der Bewegung stattfindet. Dies hat den Vorteil, dass die zu messende Position nur grob angefahren werden muss.

Bei dem Stand der Technik nach bekannten Verfahren muss die zu messende Position vorab festgelegt, also bekannt sein. Diese muss dann im Start-Stop oder dem kontinuierlichen Betrieb vom Bediener manuell angefahren werden. Der Bediener muss sich dazu auf dem Bauteil orientieren, was mitunter zu hohen zeitlichen Aufwänden führt.

Durch die Erfindung soll daher auch die Aufgabe gelöst werden, die Bestimmung der Geometrie eines Messobjektes bedienerfreundlich und schnell durchzuführen. Insbesondere soll dabei ein möglichst großer Anteil oder das gesamte Messobjekt erfasst werden, ohne dass der Bediener vorher festgelegte Einzelpositionen anfahren muss.

Dieser Aspekt der Erfindung wird insbesondere dadurch gelöst, dass während der beliebig durch einen Bediener durchgeführten Positionierung des Messobjektes in Bezug auf den optischen Sensor - auch Bildverarbeitungssensor genannt - Bilder aufgenommen und gegebenenfalls ausgewertet werden. Die Bildaufnahme erfolgt entweder während der Bewegung oder beim Stoppen des manuellen Positioniervorgangs. Der eingesetzte optische Sensor wie Kamera, insbesondere CCD- oder CMOS-Kamera, erfasst dabei regelmäßig Bilder oder nur bei Änderung des Bildinhaltes, z.B. ausgelöst durch die Veränderung der Messposition, Beleuchtung, Integrationszeit der Kamera, Dauer oder Zeitpunkt einer blitzartigen Beleuchtung oder das Erreichen eines Positionsbereiches, der zuvor noch nicht eingenommen wurde. Zumindest einige der Teilbilder, die den zuvor erläuterten Einzelbildern entsprechen und diese nach der erfindungsgemäßen Lehre bewertet bzw. ausgewertet werden, überlappen sich in zumindest einem Bereich.

Eine ausgewählte Anzahl von Einzelbildern wird nach Abschluss der Positionierung zur weiteren Auswertung zur Verfügung gestellt. Insbesondere werden mehrere Einzelbilder - auch Teilbilder genannt - zu einem Gesamtbild zusammengesetzt, vorzugsweise durch Resampling-Verfahren unter Zuhilfenahme von Interpolations- oder Mittelungsalgorithmen. Die Teilbilder werden dabei vorzugsweise auf einem Bildschirm dargestellt. Dies erfolgt parallel zur Positionierung, wodurch der Bediener den bereits abgefahren Bereich des Messobjektes überwachen kann. Gegebenenfalls wird der bereits erfasste Bereich jeweils auf die Größe der Anzeigeeinheit skaliert. Insbesondere werden Teilbilder dann dargestellt und zur weiteren Auswertung zur Verfügung gestellt, wenn eine Position erreicht wird, an der noch keine kompletten Messdaten vorliegen, also ein Teil des aktuell durch den Bildverarbeitungssensor aufgenommenen Objektbereiches noch nicht im Messbereich des Bildverarbeitungssensors angeordnet war. Dies kann beispielsweise überwacht werden, indem die Positionen und Bilder bereits ausgewählter Bilder mit den aktuell aufgenommenen verglichen werden. Anhand der Position und dem Messbereich des Bildverarbeitungssensors, gebildet aus Kameramessbereich und gewähltem Abbildungsobjektiv, wird dabei der jeweils erfasste Teil des Messobjektes bestimmt.

Das beschriebene Verfahren kann für überwiegend ebene Werkstückbereiche aber auch weitestgehend drehsymmetrische Werkstückbereiche angewendet werden.

Bei ebenen Werkstücken, die fest auf einem Messtisch angeordnet sind, wird günstiger Weise zunächst mit Hilfe einer vertikalen Verstellung das Messobjekt in den Scharfbereich des Bildverarbeitungssensor positioniert. Anschließend wird mit Hilfe der lateralen Achsantriebe die manuelle Positionierung in der Ebene des Werkstückes vorgenommen und dabei Positionen und Bilder aufgezeichnet.

Bei Verwendung von rotationssymmetrischen oder weitestgehend rotationssymmetrischen Werkstücken, die an einer mechanischen Drehachse angeordnet sind, erfolgt zunächst die Scharfstellung mit Hilfe der Bewegungsachse, die senkrecht zur Drehachse und in Richtung der optischen Achse des Bildverarbeitungssensors verläuft. Anschließend erfolgt die Bildaufnahme während der Kombination der lateralen Positionierung des Messobjektes bezüglich des Bildverarbeitungssensors und der Drehbewegung der Drehachse. Die Darstellung der aufgezeichneten Bilder auf einer Anzeigeeinheit erfolgt dabei im abgewickelten Format.

Nach dem Zusammensetzen der einzelnen Teilbilder, die den Einzelbildern zuvor entsprechen, zu einem Gesamtbild steht dieses zur weiteren Auswertung, beispielsweise zur Erkennung und Bestimmung von Konturen, Kanten oder Geometriemerkmalen zur Verfügung.

Erfindungsgemäß kann die Bildaufnahme auch bei Relativbewegung zwischen Bildverarbeitungssensor und Messobjekt erfolgt. Hierbei erfolgt die Bildaufnahme durch den Bildverarbeitungssensor und die Positionsaufnahme durch die Maßstabssysteme der manuellen Bewegungsachsen und die Ansteuerung einer gegebenenfalls eingesetzten blitzartigen Beleuchtung synchronisiert, durch ein Triggersignal gesteuert. Ein Triggersignal wird beispielsweise generiert, wenn eine neue Messposition eingenommen wurde, an der ein noch nicht gemessener Teilbereich des Messobjektes durch den Bildverarbeitungssensor erfasst wird oder sich der Bildinhalt geändert haben muss, weil sich Beleuchtung, Integrationszeit der Kamera oder Dauer oder Zeitpunkt einer blitzartigen Beleuchtung geändert haben. Alternativ können Bilder auch regelmäßig, durch einen Messtakt vorgegeben, aufgenommen werden.

Vorzugsweise wird das Verfahren in einem Koordinatenmessgerät eingesetzt.

Die Erfindung bezieht sich somit auf ein Verfahren zur Bestimmung der Geometrie eines Messobjektes mit Hilfe eines optischen Sensors bzw. Bildverarbeitungssensors und einer manuellen Positioniereinrichtung und zeichnet sich dadurch aus, dass während eines und/oder zwischen mehreren Positioniervorgängen automatisch mit dem Bildverarbeitungssensor Einzelbilder aufgenommen und anschließend ausgewählte Einzelbilder zu einem Gesamtbild zusammengesetzt und zur weiteren Auswertung zur Verfügung gestellt werden.

Insbesondere ist vorgesehen, dass ein Einzelbild ausgewählt wird, wenn ein Bereich des Messobjektes durch den Bildverarbeitungssensor erfasst wird, der zuvor noch nicht vollständig erfasst wurde.

Die Erfindung zeichnet sich insbesondere auch dadurch aus, dass der optische Sensor wie die Kamera, wie CCD- oder CMOS-Kamera, regelmäßig und/oder bei Änderung der Position der Positioniervorrichtung und/oder bei Erreichen eines Positionsbereiches der Positioniervorrichtung und/oder bei Änderung der Beleuchtung und/oder bei Änderung weiterer die Bildaufnahme und/oder den Bildinhalt beeinflussender Parameter, wie beispielsweise Integrationszeit der Kamera oder Dauer oder Zeitpunkt einer blitzartigen Beleuchtung, ein Einzelbild aufnimmt.

Es besteht auch die Möglichkeit, dass sich die ausgewählten Einzelbilder leicht überlappen.

Hervorzuheben ist des Weiteren, dass die ausgewählten Einzelbilder mit Hilfe von Resampling-Verfahren, z.B. unter Verwendung von Interpolations- oder Mittelungsverfahren, zu einem Gesamtbild zusammengesetzt und zur weiteren Auswertung zur Verfügung gestellt werden und vorzugsweise auf einem Anzeigeelement, für rotationssymmetrische Bauteile in abgewickelter Form, dargestellt werden, vorzugsweise jeweils auf die Größe der Anzeigeeinheit angepasst skaliert.

Die Erfindung zeichnet sich auch dadurch aus, dass die Erkennung, ob ein aufgenommenes Einzelbild ausgewählt und zur weiteren Auswertung zur Verfügung gestellt wird, dadurch erfolgt, dass die Position und/oder die Veränderung der Position, ermittelt durch Maßstabssysteme, der manuell zu betätigenden Bewegungsachsen und/oder der vom Bilderverarbeitungssensor aufgenommene Bildinhalt überwacht wird.

Insbesondere ist vorgesehen, dass die Überwachung die Ermittlung und für den Fall, dass das Bild ausgewählt wird, die Speicherung der Positionen und/oder Bildinhalte des jeweils aufgenommenen Einzelbildes und den Vergleich mit bereits vorliegenden Positionen und/oder Bildinhalten bereits ausgewählter Bilder umfasst.

Hervorzuheben ist des Weiteren, dass anhand des Vergleiches mit bereits vorliegenden Positionen und/oder Bildinhalten bereits ausgewählter Einzelbilder dann ein Einzelbild ausgewählt wird, wenn zumindest ein Teil des Einzelbildes einen Bereich des Messobjektes erfasst, der zuvor noch nicht erfasst wurde, wobei der Messbereich des Bildverarbeitungssensors, gebildet aus Kameramessbereich und gewähltem Abbildungsobjektiv, berücksichtigt wird.

Auch zeichnet sich die Erfindung dadurch aus, dass nach Positionierung der Werkstückoberfläche in den Scharfbereich des Bildverarbeitungssensors überwiegend ebene Werkstückbereiche mit Hilfe der lateralen Achsen und überwiegend rotationssymmetrische Werkstückbereiche zusätzlich mit Hilfe einer mechanischen Drehachse in den Messbereich des Bildverarbeitungssensors positioniert werden.

In eigenerfinderischer Weiterbildung ist vorgesehen ein Verfahren zur Bestimmung der Geometrie eines Messobjektes mit Hilfe eines Bildverarbeitungssensors und einer manuellen Positioniereinrichtung, das sich dadurch auszeichnet, dass die Bildaufnahme bei Relativbewegung zwischen Bildverarbeitungssensor und Messobjekt erfolgt, wobei die Einzelbildaufnahme durch den Bildverarbeitungssensor und die Positionsaufnahme durch die Maßstabssysteme der manuellen Bewegungsachsen, und vorzugsweise eine blitzartige Beleuchtung, durch ein Triggersignal gesteuert, synchronisiert erfolgt.

Insbesondere ist vorgesehen, dass das Verfahren in einem Koordinatenmessgerät eingesetzt wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines den Zeichnungen zu entnehmenden bevorzugten Ausführungsbeispiels.

Es zeigen:
- Fig. 1: ein Bild nach dem Stand der Technik, aufgenommen mit einer Standardintegrationszeit,
- Fig. 2a) - c): Einzelbilder, aufgenommen mit Intergrationszeiten, die kürzer als die Standardintergrationszeiten sind,
- Fig. 3a) - c): ein Ausrichten der Einzelbilder gemäß Fig. 2 auf ein gemeinsames Pixelraster,
- Fig. 4a) - c): die ausgerichteten Einzelbilder gemäß Fig. 3, eingegrenzt auf den gleichen Bereich,
- Fig. 5: ein durch Überlagerung der Grauwertamplituden der Bilder 4a) - c) erzeugtes Gesamtbild,
- Fig. 6: zu messender Ausschnitt eines Bauteils,
- Fig. 7: Lage der aufgenommenen Kamerabilder nach dem Stand der Technik,
- Fig. 8: Einzelbilder aus Fig. 7 und Zusammensetzung dieser,
- Fig. 9: Verteilung weiterer Kamerabilder im Bereich des zu bestimmenden Abschnitts,
- Fig. 10: Einzelbilder aus Fig. 9,
- Fig. 11: Lage der Einzelbilder aus Fig. 7 und Fig. 9,
- Fig. 12: Einzelbilder aus Fig. 11 und Überlagerung zum Gesamtbild,
- Fig. 13: eine Messanordnung mit photosensitiver Detektionseinrichtung in Prinzipdarstellung,
- Fig. 14: eine Prinzipdarstellung eines Koordinatenmessgerätes,
- Fig. 15: eine Prinzipdarstellung einer Anzeigeeinheit,
- Fig. 16: die Prinzipdarstellung des Koordinatenmessgerätes in einer zweiten Position eines Messobjektes und
- Fig. 17: eine Prinzipdarstellung eines Gesamtbildes.

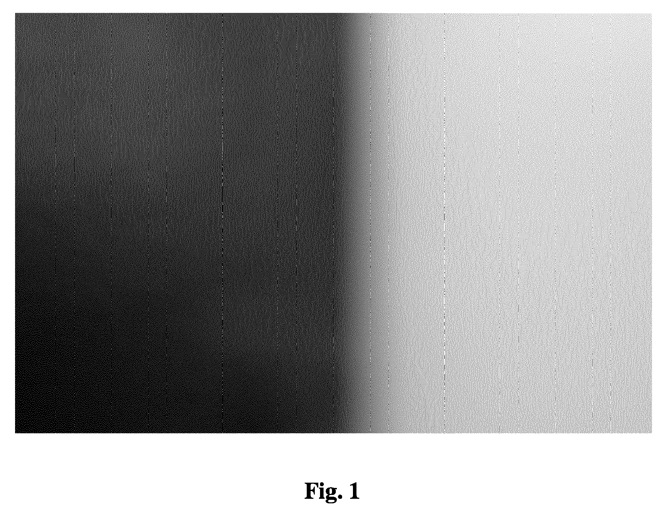

Fig. 1 zeigt ein unscharfes Bild, welches entsteht, wenn während einer relativ langen Integrationszeit (wie z. B. einer Standardintegrationszeit von 15 oder 20 Millisekunden) das Messobjekt, hier eine Objektkante, bezüglich des optischen Sensors - wie Kamera - mehr oder weniger stark bewegt wird. Dies kann durch Vibrationen des Messgerätes, aber auch gewollt aufgrund einer optischen Messung in der Bewegung ausgelöst werden. Die Bestimmung der Lage der Kante, also des Übergangs zwischen dunklem und hellem Bereich im Bild, kann nur mit geringer Genauigkeit erfolgen.

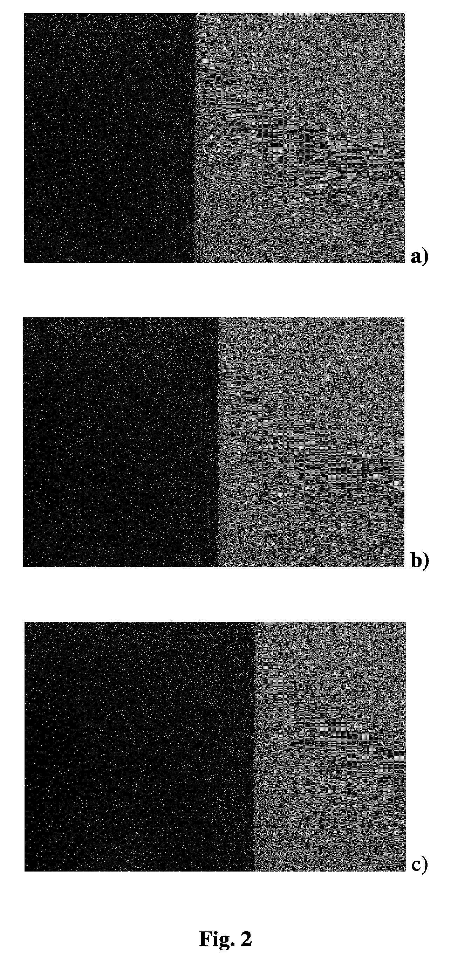

Fig. 2a) bis c) zeigen drei Aufnahmen des nahezu gleichen Abschnitts des Objektes, insbesondere der gleichen Objektkante wie in Abbildung 1, welche unmittelbar nacheinander aber mit deutlich kürzeren Integrationszeiten als 20 Millisekunden, wie beispielsweise 5 Millisekunden aufgenommen wurden. Die Aufnahmen zeigen nun eine scharfe Abbildung der Kante, jedoch aufgrund der kürzeren Integrationszeit dunklere Bilder. Aufgrund der verkleinerten Helligkeit ist eine Erkennung der Kante unter Umständen nicht möglich oder führt zu großen Messabweichungen.

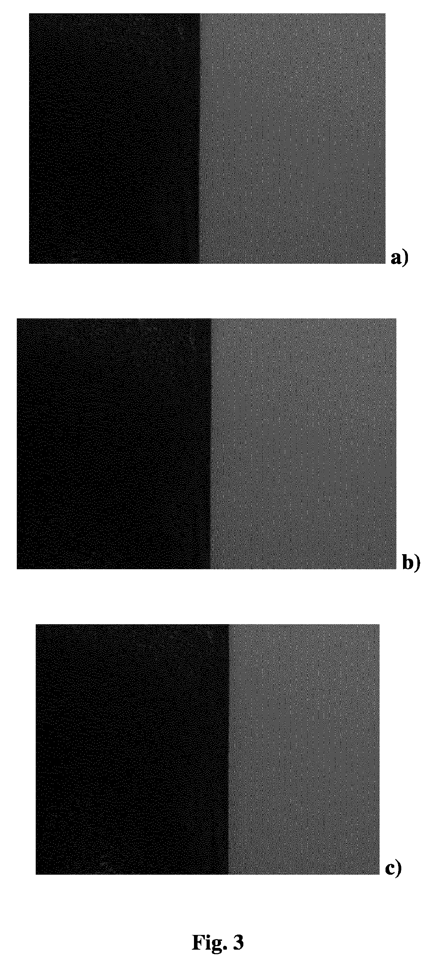

Fig. 3 zeigt das erfindungsgemäße Verschieben der Einzelbilder a) bis c) auf ein gemeinsames Pixelraster. In diesem Fall wurde die Position des Bildes der Fig. 3b) als Referenz gewählt. Fig. 3a) zeigt also das nach rechts verschobene Bild der Fig. 2a) und Fig. 3c) das nach links verschobene Bild der Fig. 2c). Die Verschiebung wurde aufgrund der den einzelnen Bildern der Fig. 2a) bis 2c) zugeordneten, durch das Koordinatenmessgerät bestimmten Position durchgeführt. Alternativ oder zusätzlich kann die Lageverschiebung zwischen den Bildern der Fig. 2a) bis 2c) auch mit Korrelationsverfahren bestimmt werden. Um im späteren Schritt die Grauwertamplituden der Pixel addieren zu können, erfolgt die Verschiebung mit Hilfe von Resampling-Verfahren auf ein exakt gleiches Pixelraster, in diesem Fall das Pixelraster des Bildes der Fig. 2b) bzw. 3b). Der dargestellte Bildbereich der Bilder der Fig. 3a) und c) wurde auf die Größe des Bildes gemäß Fig. 3b) beschränkt.

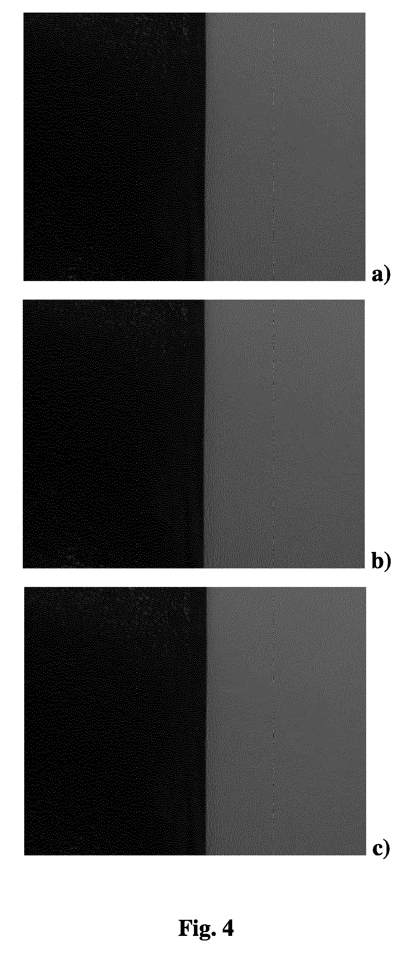

Fig. 4 zeigt die erfindungsgemäß verschobenen und zusätzlich auf den Bereich eingegrenzten Bilder, welcher in allen drei Teilbildern der Fig. 2a) bis c) bzw. 3a) bis c) enthalten ist.

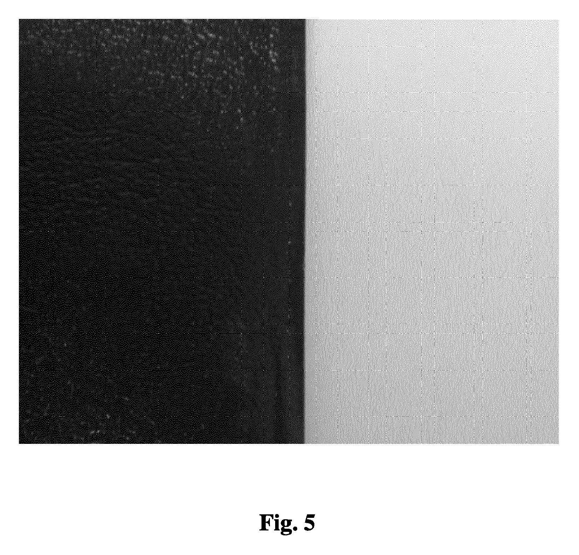

In Fig. 5 kann nun im letzten Schritt die Überlagerung der Grauwertamplituden der jeweiligen Pixel der Fig. 4a) bis 4c) erfolgen und es ergibt sich eine scharfe Abbildung des Objektes bzw. der Objektkante. An dieser kann nun eine Kantenerkennung oder alternativ eine Helligkeits- oder Kontrastauswertung bei Autofokusverfahren, mit sehr hoher Genauigkeit erfolgen, da die mittlere Helligkeit des Bildes in Figur 5 der Summenhelligkeit der drei Einzelbilder entspricht, in diesem Fall also äquivalent zu einem Bild ist, welches mit einer Integrationszeit von 15 Millisekunden aufgenommen wurde, jedoch eine Bildunschärfe nicht aufweist, die nach dem Stand der Technik bei einer Relativbewegung zwischen Objekt und Sensor bei Standardintegrationszeit auftritt.

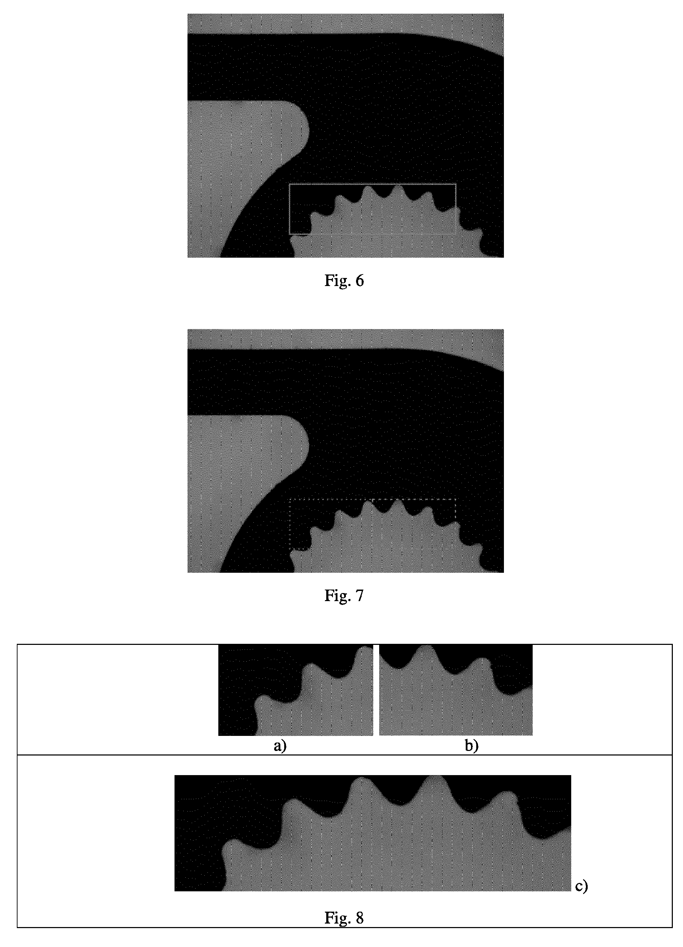

Analog zum in den Fig. 1 bis 5 beschriebenen Verfahren der Messung mit kürzeren Integrationszeiten und Überlagerung zur Verringerung des Rauschens, wird in den Fig. 6 bis 12 ein Verfahren näher erläutert, bei dem sich die zum Gesamtbild zusammenzusetzenden Einzelaufnahmen nur teilweise oder gar nicht überlagern.

Fig. 6 zeigt hierzu ein Bauteil, dass im Bereich des durch das helle Kästchen gekennzeichneten Abschnitts optisch erfasst werden soll.

Fig. 7 zeigt, wie dies nach dem Stand der Technik beispielsweise mit zwei einzelnen Aufnahmen erfolgt, gekennzeichnet durch ein Rechteck mit gepunkteten Linien fürdie erste Aufnahme und einem Rechteck mit gestrichelten Linien für die zweite Aufnahme. Diese beiden Einzelbilder sind in den Fig. 8a und b dargestellt. Beim Zusammenfügen zu einem Gesamtbild entsteht das in Fig. 8c dargestellte Bild. Da die aus Fig. 8a und b bereitgestellten Einzelaufnahmen bereits mit einer geringeren Integrationszeit aufgenommen wurden, ist das sich ergebende Bild gemäß Fig. 8c relativ dunkel.

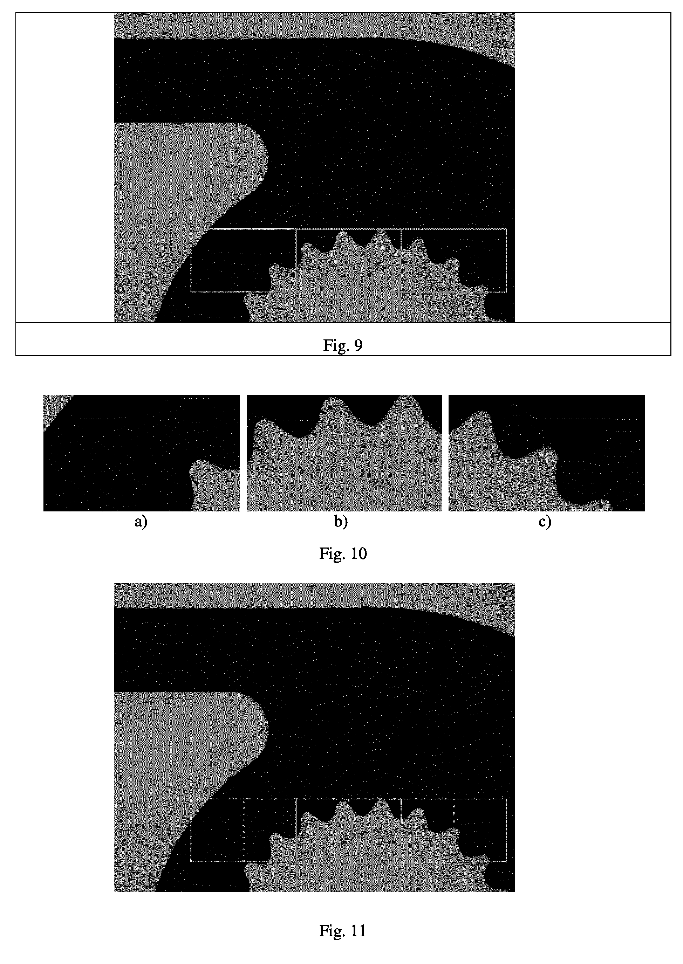

Fig. 9 zeigt, gekennzeichnet durch drei weiße Rechtecke, an welchen Teilbereichen im Bild zusätzliche Bilder aufgenommen werden. Die aufgenommenen Einzelbilder sind in der Fig. 10a, b und c dargestellt.

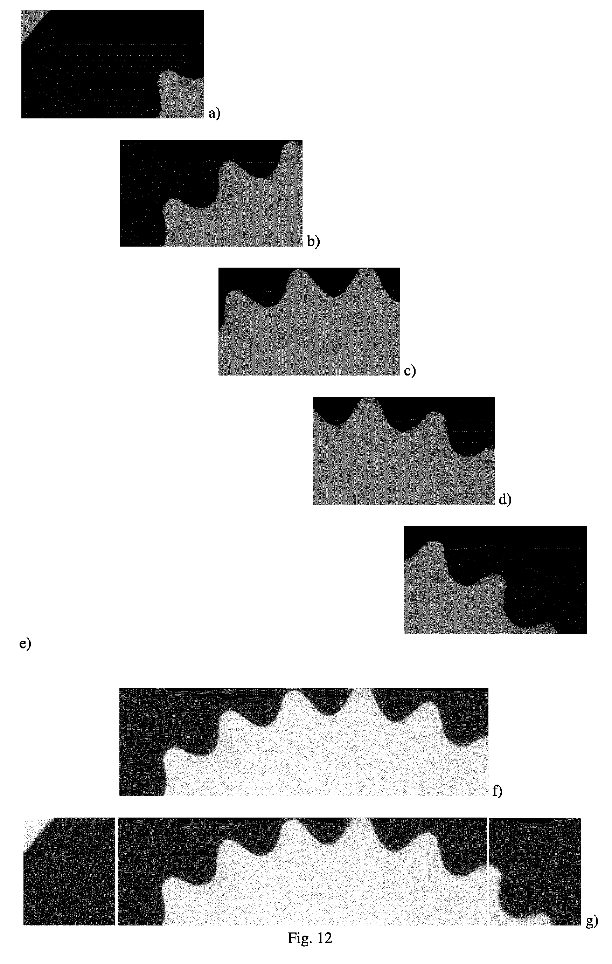

Fig. 11 zeigt die in diesem Beispiel 5 insgesamt aufgenommenen Teilbilder, gekennzeichnet durch die drei Rechtecke und die beiden gepunkteten bzw. gestrichelten Rechtecke. Hierbei ist zu erkennen, dass sich die Einzelaufnahmen jeweils zu 50 % überlagern. Die sich ergebenden Einzelaufnahmen sind in Fig. 12a bis 12e dargestellt. Die Überlappung zwischen den Bildern a und b, b und c, c und d, d und e beträgt jeweils etwa 50 %. Werden die Grauwertamplituden der Überlagerungsbereiche addiert, ergibt sich für die Bereiche, in denen eine Überlagerung vorliegt, das in Fig. 12f dargestellte Gesamtbild. Die linke Hälfte in Fig. 12a und die rechte Hälfte des in Fig. 12e dargestellten Einzelbildes wurden zur Auswertung nicht herangezogen, da hier keine Überlagerung vorliegt. Alternativ hierzu kann eine Normierung bzw. Skalierung, in diesem Fall eine Verdopplung der Grauwertamplituden in diesen fehlenden Bereichen vorgenommen und auch diese zum Gesamtbild hinzugezogen werden.

Dieses Gesamtbild ist in Figur 12g dargestellt. Es ist erkennbar, dass die Bereiche, die aus der linken Hälfte aus Figur 12a und der rechten Hälfte aus Figur 12e stammen, ein höheres Rauschniveau besitzen.

Die gleiche Vorgehensweise ist auch möglich, wenn die Bauteiloberfläche gekrümmt ist. Hierzu werden die Einzelaufnahmen beispielsweise in verschiedenen Drehstellungen des Bauteils ermittelt. Werden die Bereiche im Bild entsprechend der vorliegenden Krümmung anschließend entzerrt, entsteht bei der Überlagerung der Einzelaufnahmen, ein durch Resampling äquidistantes Punkteraster, vorzugsweise für eine abgewickelte Darstellung der Mantelfläche eines beispielsweise zylindrischen Bauteils.

Das in den Fig. 6 bis 12 dargestellte Verfahren ist ebenso bei Überlappungsgraden größer aber auch kleiner als 50 % möglich. Hierzu werden pro Objektbereich entweder mehrere Bilder überlagert, deren Grauwertamplituden addiert werden oder es erfolgt keine Überlagerung und eine entsprechende Skalierung der Grauwerte.

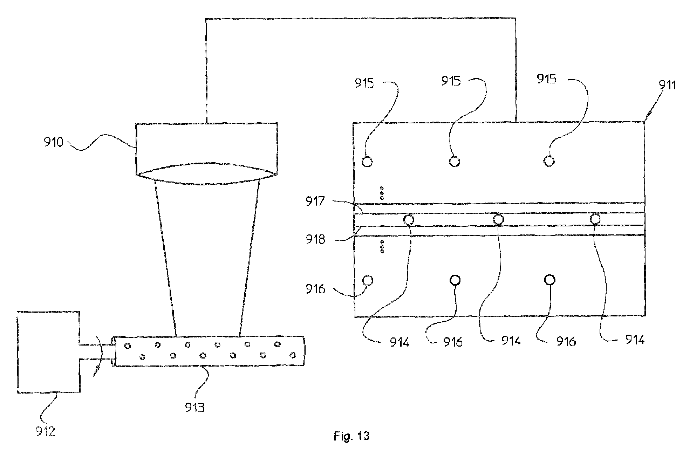

Figur 13 zeigt einen auch als optisches Abbildungssystem 910 bezeichneten optischen Sensor, zuvor auch Kamera genannt, welches mit einer matrixförmigen photosensitiven Detektionseinrichtung 911 verbunden ist und zur Messung eines an einer Drehachse 912 angebrachten rotationsförmigen Messobjektes 913 eingesetzt wird. Auf Grund der Oberflächenkrümmung des Messobjektes 913 werden auf der Detektionseinrichtung 911 jeweils nur ein Teil der Merkmale des Messobjektes 913 scharf dargestellt. Abhängig von der Schärfentiefe des optischen Abbildungssystems 910 werden beispielsweise nur die Merkmale 914 in einer definierten Drehstellung scharf abgebildet. Die Merkmale 915 werden daher beispielsweise in einem Drehschritt früher und die Merkmale 916 in einem Drehschritt später scharf abgebildet. Da im Ausführungsbeispiel die Merkmale 914 scharf abgebildet und damit diese ordnungsgemäß ausgewertet werden können, ist es ausreichend, den Bereich der Detektionseinrichtung 911 zwischen den Zeilen 917 und 918 der Detektionseinrichtung 911 auszuwerten und an eine Auswerteeinrichtung zu übermitteln. Hierdurch sind wiederum deutlich höhere Wiederholraten der Detektionseinrichtung erreichbar.

In diesem Beispiel kann davon ausgegangen werden, dass der scharf abgebildete Teil des Messobjektes 913, einen entsprechenden Rundlauf des Messobjektes vorausgesetzt, im Bildbereich der fotosensitiven Detektionseinrichtung 911 ortfest verbleibt. Daher ist es sinnvoll, während der Programmierung des Messablaufs eine feste Position des Messfensters zu definieren.

Auch bei diesen Messverfahren des rotationsförmigen Messobjekts 913 werden entsprechend der erfindungsgemäßen Lehre Einzelbilder derart aufgenommen, dass Einzelbilder sich zumindest teilweise überlappen, um bei einer Auswertung den überlappenden Bereich zu nutzen.

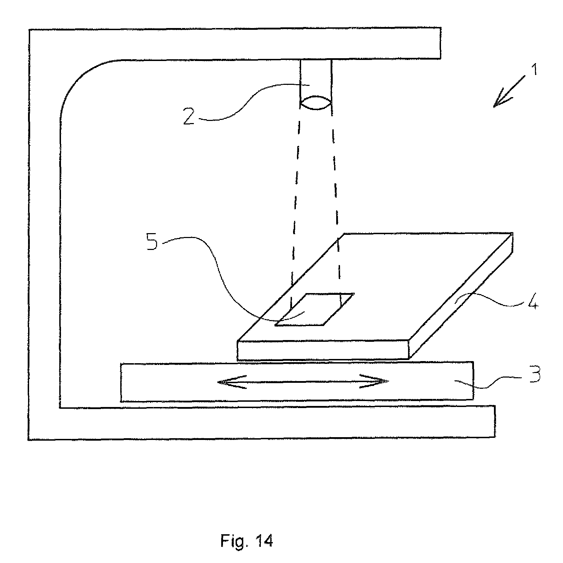

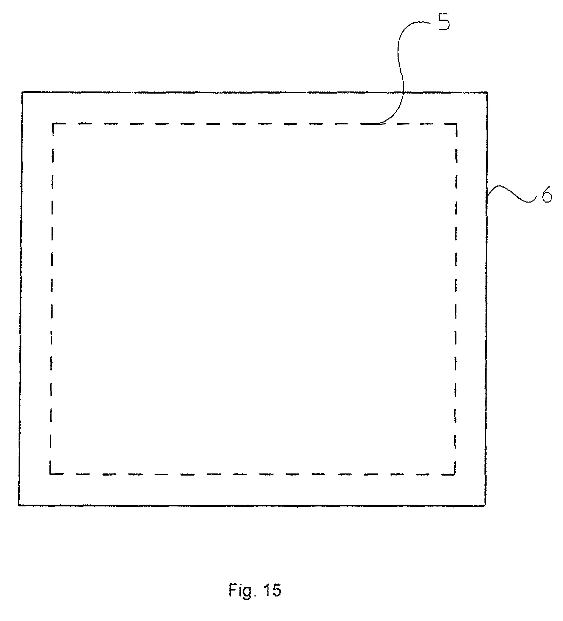

Fig. 14 zeigt rein prinzipiell ein Koordinatenmessgerät 1 mit Bildverarbeitungssensor 2 wie Kamera, insbesondere CCD- oder CMOS-Kamera, und manueller Positionierachse 3 sowie ein Messobjekt 4 in einer ersten Position. Das Bezugszeichen 5 bezeichnet den vom Bildverarbeitungssensor 2 erfassten Bereich des Messobjektes 4 in dieser Stellung. Dieser wird auf der in Fig. 15 gezeigten Anzeigeeinheit 6 zunächst in voller Bildschirmgröße dargestellt.

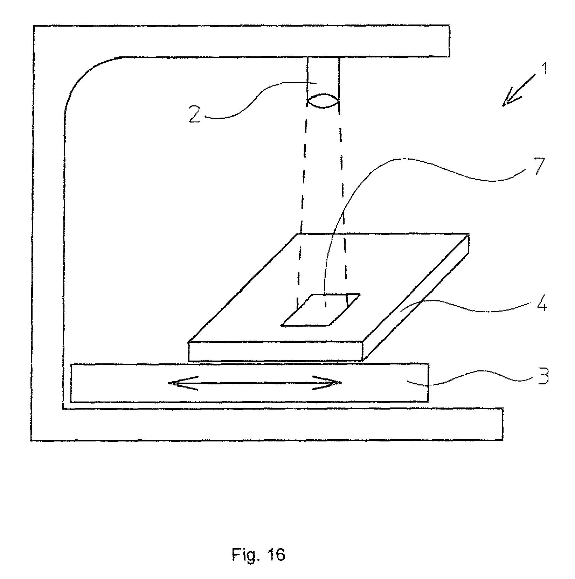

Fig. 16 zeigt das Koordinatenmessgerät aus Fig. 14 in einer zweiten Position des Messobjektes 4. Diese Position wurde eingenommen, indem der Bediener die manuellen Antriebe der Positionierachse 3 betätigt hat. Nun wird der Bereich 7 des Messobjektes durch den Bildverarbeitungssensor 2 erfasst. Anhand der geänderten Messobjektposition, angezeigt durch die Veränderung der durch die Maßstabssysteme der Positionierachse 3 bestimmten Position, wird erkannt, dass ein noch nicht erfasster Bereich 7 des Messobjektes 4 vom Bildverarbeitungssensor 2 erfasst wird und das aufgenommene Einzelbild ausgewählt und mit dem bereits ausgewählten Einzelbild des Bereiches 5 mit Hilfe von Resamplingverfahren zu einem Gesamtbild 8 zusammengesetzt wird.

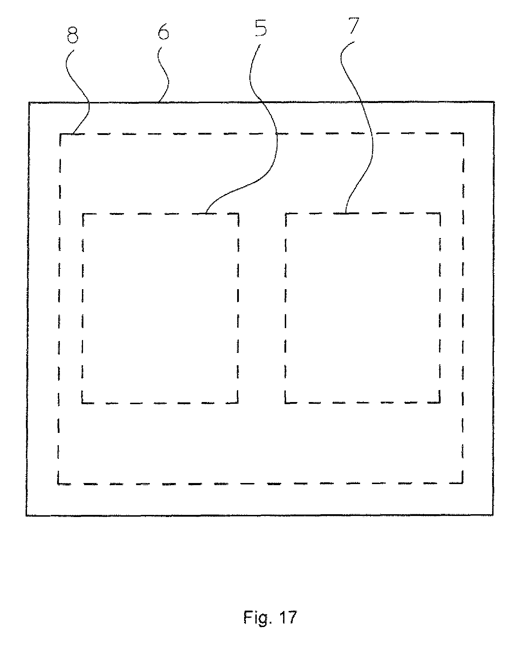

Fig. 17 zeigt die Darstellung des Gesamtbildes 8 aus den Bereichen 5 und 7 des Messobjektes auf der Anzeigeeinheit 6. Die Darstellung erfolgt skaliert, damit alle aufgenommenen Bereiche sichtbar sind.

Zunächst besteht das Gesamtbild nur aus den Bereichen 5 und 7, da weitere Informationen zum Bereich des Gesamtbildes 8 nicht vorliegen.

Erfindungsgemäß werden alternativ fortlaufend Bilder mit dem Bildverarbeitungssensor 2 aufgenommen, also auch an den Positionen zwischen der ersten Position der Fig. 14 und der zweiten Position der Fig. 16, insbesondere während der Bewegung der Positionierachse 3. Die aufgenommenen Bilder werden entsprechend ihrer Positionen überlagert und füllen das Gesamtbild 8 Stück für Stück. Höchste Bildschärfe für die während der Bewegung aufgenommenen Bilder wird erreicht, indem die Kamera des Bildverarbeitungssensors nur kurz belichtet wird und die erforderliche Helligkeit durch die erfindungsgemäße Überlagerung der Teilbilder erzielt wird.

## Patentansprüche

1. Verfahren zur Erzeugung und Auswertung eines Bildes von zumindest einem Abschnitt eines Messobjekts in einem Koordinatenmessgerät mit einer Kamera, wobei das Koordinatenmessgerät eingesetzt wird, das Mittel zur Relativbewegung zwischen dem Messobjekt und der Kamera zur Verfügung stellt und in das der optische Sensor integriert ist,
**dadurch gekennzeichnet,**
**dass** von dem zumindest einen Abschnitt Einzelbilder mit der Kamera aufgenommen werden, von denen zumindest einige Einzelbilder sich jeweils zumindest teilweise überlappen, und dass zur Erzeugung des Bilds die Einzelbilder oder Signale dieser in Bezug zueinander ausgerichtet und zu einem Gesamtbild als das Bild des zumindest einen Abschnitts überlagert werden, wobei die Auswertung des Gesamtbildes im Wesentlichen auf die überlappenden Bereiche der Einzelbilder beschränkt wird und/oder die Auswertung des Gesamtbildes oder eines Teils von diesem unter Zugrundelegung der überlappenden Bereiche der diese aufweisenden Einzelbilder erfolgt, wobei das Verfahren zur Bilderzeugung bei Autofokusmessungen oder für die Bilderzeugung für Bildverarbeitungsmessungen während einer Kamerabewegung eingesetzt wird.

2. Verfahren nach Anspruch 1,
**dadurch gekennzeichnet,**
**dass** die räumliche Lage der Einzelaufnahmen zueinander unter Zuhilfenahme der Korrelation der Grauwerte der Einzelaufnahmen und/oder unter Zuhilfenahme der zu jeder Einzelaufnahme bestimmten Kameraposition ermittelt wird, wobei die Kameraposition vorzugsweise aus den Achspositionen eines Koordinatenmessgerätes bestimmt wird, in das die Kamera vorzugsweise integriert ist.

3. Verfahren nach Anspruch 1 oder 2,
**dadurch gekennzeichnet**,
die Einzelaufnahmen in verschiedenen Drehstellungen des Objektes aufgenommen werden.

4. Verfahren nach zumindest einem der vorhergehenden Ansprüche,
**dadurch gekennzeichnet,**
**dass** die räumliche Lage der Einzelaufnahmen zueinander unter Zuhilfenahme der Drehlage des Bauteils ermittelt wird und vorzugsweise die Einzelbilder aufgrund der Krümmung des Objektes entzerrt werden.

5. Verfahren nach zumindest einem der vorhergehenden Ansprüche,
**dadurch gekennzeichnet,**
**dass** die Überlagerung durch Addition der Intensitäten beziehungsweise Grauwerte der Pixel der Einzelaufnahmen erfolgt.

6. Verfahren nach zumindest einem der vorhergehenden Ansprüche,
**dadurch gekennzeichnet,**
**dass** vor der Überlagerung der räumliche Lageversatz zwischen den Einzelaufnahmen durch Verschiebung und/oder Drehung, zumindest in der Bildebene der Einzelaufnahmen, korrigiert wird.

7. Verfahren nach zumindest einem der vorhergehenden Ansprüche,
**dadurch gekennzeichnet,**
**dass** bei Autofokusmessungen in Richtung optischer Achse des optischen Sensors Einzelbilder aufgenommen werden, dass aufeinanderfolgende Einzelbilder überlagert und in Gruppen unterteilt werden, wobei jede Gruppe ein Bild für die Autofokusmessung bildet, und dass sämtliche Einzelbilder unter Berücksichtigung eines gegebenenfalls vorhandenen seitlichen Versatzes in Bezug auf das Objekt zueinander ausgerichtet werden.

8. Verfahren nach zumindest einem der vorhergehenden Ansprüche,
**dadurch gekennzeichnet,**
**dass** die Überlagerung der Teilbilder derart erfolgt, dass für jedes Teilbild und jeden Teilbereich jedes Teilbildes, bestehend aus einem oder mehreren Pixeln, die Anzahl der zur Überlagerung verwendeten korrespondierenden Teilbereiche der in Bewegungsrichtung benachbarten Teilbilder getrennt gewählt wird, vorzugsweise derart, dass der nach der Überlagerung vorliegende Grauwert jedes Teilbereiches jedes Teilbildes jeweils einen, vorzugsweise gemeinsamen, Schwellwert überschreitet und vorzugsweise anschließend der Grauwert entsprechen der Anzahl der Überlagerungen normiert wird.

9. Verfahren nach zumindest einem der vorhergehenden Ansprüche,
**dadurch gekennzeichnet,**
**dass** für die Überlagerung gleich viele benachbarte Teilbilder in positiver und negativer Bewegungsrichtung ausgewählt werden und der Position des resultierenden Teilbereiches in Bewegungsrichtung entweder die Position des ursprünglichen Teilbereiches in Bewegungsrichtung zugeordnet wird oder der Mittelwert oder der Median der Positionen der jeweils zur Überlagerung verwendeten Teilbereiche in Bewegungsrichtung zugeordnet wird.

10. Verfahren nach zumindest einem der vorhergehenden Ansprüche,
**dadurch gekennzeichnet,**
**dass** während der Aufnahme der zu überlagernden Einzelaufnahmen eine vorzugsweise blitzartige Beleuchtung eingeschaltet wird, wobei Einzelbildaufnahme, Beleuchtung und Aufnahme der Position der Achsen des Koordinatenmessgerätes derart synchronisiert wird, dass eine exakte Position für jede Einzelaufnahme vorliegt und gewährleistet ist, dass während der Integrationszeit jeder Einzelaufnahme die Beleuchtung eingeschaltet ist.

11. Verfahren nach zumindest einem der vorhergehenden Ansprüche,
**dadurch gekennzeichnet,,**
**dass** als Messobjekte solche verwendet werden, die eine rotationssymmetrische und/oder zylindrische Gestalt aufweisen, insbesondere Stents sind, wobei insbesondere zur Messung rotationssymmetrischer und/oder zylindrischer Messobjekte Dreh- und/oder Schwenkachsen eingesetzt werden.

12. Verfahren nach zumindest einem der vorhergehenden Ansprüche unter Verwendung einer manuellen Positioniereinrichtung, mit der das zu messende Objekt relativ zu einem optischen Sensor verstellt wird,
**dadurch gekennzeichnet,**
**dass** während eines Positioniervorgangs und/oder zwischen mehreren Positioniervorgängen automatisch mit dem optischen Sensor Einzelbilder aufgenommen und anschließend ausgewählte Einzelbilder zu einem Gesamtbild zusammengesetzt und zur weiteren Auswertung zur Verfügung gestellt werden.

13. Verfahren nach zumindest einem der vorhergehenden Ansprüche,
**dadurch gekennzeichnet ,**
**dass** ein Einzelbild ausgewählt wird, wenn ein Bereich des Messobjektes durch den optischen Sensor erfasst wird, der zuvor noch nicht vollständig erfasst wurde.

14. Verfahren nach zumindest einem der vorhergehenden Ansprüche,
**dadurch gekennzeichnet ,**
**dass** der optische Sensor, insbesondere eine Kamera, wie CCD- oder CMOS-Kamera, regelmäßig und/oder bei Änderung der Position der Positioniereinrichtung und/oder bei Erreichen eines Positionsbereiches der Positioniereinrichtung und/oder bei Änderung der Beleuchtung und/oder bei Änderung weiterer die Bildaufnahme und/oder den Bildinhalt beeinflussender Parameter, wie beispielsweise Integrationszeit des optischen Sensors oder Dauer oder Zeitpunkt einer blitzartigen Beleuchtung, ein Einzelbild aufnimmt.

15. Verfahren nach zumindest einem der vorhergehenden Ansprüche unter Verwendung einer manuellen Positioniereinrichtung,
**dadurch gekennzeichnet ,**
**dass** die Bildaufnahme bei Relativbewegung zwischen dem optischen Sensor und dem Messobjekt erfolgt, wobei die Bildaufnahme durch den optischen Sensor und die Positionsaufnahme durch die Maßstabssysteme der manuellen Bewegungsachsen, und vorzugsweise eine blitzartige Beleuchtung, durch ein Triggersignal gesteuert, synchronisiert erfolgt.
